# FASCICULE DE BREVET EUROPEEN

(11) **EP 1 872 083 B1**
(45) Date de publication et mention de la délivrance du brevet: **19.11.2008**
(21) Numéro de dépôt: 06743656.8
(22) Date de dépôt: 07.04.2006
(51) Int. Cl.: G01B 7/008, G01B 21/04

(54) **APPAREIL DE MESURE TRIDIMENSIONNELLE A BRAS ARTICULES COMPORTANT UNE PLURALITE D'AXES D'ARTICULATION**
VORRICHTUNG ZUR DREIDIMENSIONALEN MESSUNG MIT GELENKARMEN MIT MEHREREN SCHWENKSTIFTEN
THREE-DIMENSIONAL MEASURING APPARATUS WITH ARTICULATED ARMS COMPRISING A PLURALITY OF PIVOT PINS

(30) Priorité: 20.04.2005 FR 0503947
(43) Date de publication de la demande: 02.01.2008
(73) Titulaire: ROMER, 41800 Montoire sur le Loir (FR)
(72) Inventeur: GRANGER, Romain, F-41800 Montoire (FR)
(74) Mandataire: Jaunez, Xavier
(86) Numéro de dépôt international: PCT/FR2006/000773
(87) Numéro de publication internationale: WO 2006/111630

(56) Documents cités:
- US-A- 4 984 959
- US-A- 5 829 148

## Description

La présente invention concerne un appareil de mesure tridimensionnelle à bras articulés comportant une pluralité d'axes d'articulation.

### Arrière-plan de l'invention

Il existe de très nombreux documents de brevets illustrant des appareils de mesure tridimensionnelle à bras articulés comportant une pluralité d'axes d'articulation. Les appareils de mesure les plus récents comportent couramment jusqu'à six axes d'articulation.

D'une façon générale, les appareils de mesure tridimensionnelle à bras articulés comportent classiquement des codeurs angulaires intégrés auxdits bras pour mesurer individuellement les angles de rotation autour de chacun des axes d'articulation.

On pourra, par exemple, se référer aux documents US-A- 5 402 582, US-A- 5 611 147, US-A- 5 794 356 et US-A- 5 926 782.

L'état de la technique le plus proche est illustré par le document US-A-5 829 148 qui décrit un appareil de mesure tridimensionnelle à bras articulés du type précité comportant une pluralité d'axes d'articulation, avec des codeurs angulaires intégrés auxdits bras pour mesurer individuellement les angles de rotation autour de chacun desdits axes de rotation, l'un au moins des bras de l'appareil comportant un tube creux intercalé entre deux tronçons de bras dont l'un reçoit un codeur angulaire mesurant l'angle de rotation autour de l'axe longitudinal dudit bras, conformément au préambule de la revendication 1.

D'une façon générale, de tels appareils de mesure tridimensionnelle à bras articulés doivent être extrêmement précis, et, dès que l'on procède à une intervention sur l'un des bras, il est toujours nécessaire de procéder à un recalibrage de l'ensemble de l'appareil de mesure.

De nombreux efforts ont été récemment développés pour tenter de perfectionner ces appareils de mesure tridimensionnelle, afin d'en simplifier les moyens de connexion électrique et de minimiser le poids de chaque bras articulé pour un meilleur confort lors d'une manipulation par l'opérateur.

Ainsi, par exemple, avec les codeurs angulaires associés aux bras articulés des appareils de mesure classiques, on avait un nombre très élevé de fils électriques nécessaires pour assurer la liaison entre chaque codeur et une carte d'interpolation, puis entre la carte d'interpolation et un compteur, et enfin entre le compteur et des moyens de communication générale. Or, grâce aux développements récents dans ce domaine, on propose maintenant une petite carte qui assure simultanément l'interpolation, le comptage et la liaison de connexion, et ce avec un câblage de bus limité à cinq fils électriques par codeur angulaire.

Par ailleurs, on cherche de plus en plus à pouvoir moduler la géométrie de l'appareil de mesure tridimensionnelle à bras articulés en fonction du type d'objet mesuré, et de l'espace dans lequel se situe ledit objet pour les mesures à effectuer. A ce titre, les spécialistes du domaine ont cherché à pouvoir modifier la longueur de l'un au moins des bras articulés de l'appareil de mesure tridimensionnelle. En effet, en pouvant utiliser un bras plus court ou plus long, l'opérateur peut choisir la longueur de bras la mieux adaptée au volume de l'espace de mesure et à la précision de mesure demandée, en vue d'un compromis optimal entre longueur et précision, sachant que les tolérances des pièces à mesurer sont en général serrées pour des dimensions faibles et élevées pour des distances importantes.

Le problème du remplacement d'un bras par un autre bras de longueur différente a été abordé dans le domaine des robots articulés de manipulation. Le document US-A-4 984 959 décrit ainsi un robot articulé de manipulation, dont les bras logent des arbres tournants reliés entre eux par des renvois d'angle. Chaque bras est constitué d'un tube creux intercalé entre deux tronçons de bras associés aux renvois d'angle, avec une fixation par brides aboutées et boulonnées entre elles, ce qui assure un couplage mécanique en rotation avec les arbres intérieurs concernés. Il est certes prévu un démontage pour remplacer un tube creux par un autre de longueur différente, mais il est insisté sur le fait que le démontage ne se fait qu'en usine, et qu'un recalibrage général de l'appareil de mesure tridimensionnelle doit ensuite être effectué. En tout état de cause, les couplages concernés n'ont rien à voir avec ceux d'un appareil de mesure dont les bras articulés intègrent des codeurs angulaires, de sorte que cet enseignement n'est pas transposable aux appareils de mesure tridimensionnelle à bras articulés du type précité.

La demanderesse a développé un appareil de mesure tridimensionnelle à bras articulés avec un bras tronçonné, dont les tronçons sont assemblés entre eux par boulonnage. Une telle réalisation du bras permet d'effectuer un démontage, lequel ne peut se faire qu'en usine, et de remplacer un tronçon par un autre tronçon de longueur différente, étant entendu qu'il est toujours nécessaire d'effectuer un recalibrage général de l'ensemble de l'appareil de mesure tridimensionnelle. Ainsi, la possibilité de démontage reste lourdement pénalisée par les opérations longues et délicates de démontage, remontage, et recalibrage général, qui doivent être mises en oeuvre en usine.

La demanderesse a également développé un autre appareil de mesure tridimensionnelle à bras articulés, dans lequel l'assemblage mécanique des bras est réalisé par un système à trois goupilles disposées à 120° s'emboîtant dans des gorges homologues en forme de V, afin de créer un isostatisme à six points de contact en vue d'éviter l'obligation d'un recalibrage de l'ensemble de l'appareil. Cependant, une telle structure est apparue très sensible aux variations de la force de serrage dans la mesure où l'on écrase plus ou moins les points de contact avec les goupilles, ce qui induit un manque de rigidité du positionnement, et par suite un désalignement de la géométrie. De plus, il a été constaté un manque de rigidité des bras lors de l'utilisation de l'appareil, résultant vraisemblablement de la fragilité des zones de contact, ce qui induit une imprécision à laquelle il est difficile de remédier.

Il existe donc un besoin d'un appareil de mesure tridimensionnelle à bras articulés dont la structure procure à la fois une grande souplesse d'utilisation pour un minimum de contraintes, et une adéquation optimale entre la précision demandée et le volume de l'espace de mesure.

### Objet de l'invention

La présente invention vise ainsi à concevoir un appareil de mesure tridimensionnelle à bras articulés ne présentant pas les inconvénients précités, et permettant d'offrir des capacités de montage et démontage rapides avec un minimum de contraintes, et ce sans nécessiter de retour de l'appareil de mesure en usine ou en atelier en vue du recalibrage de l'ensemble de l'appareil.

L'invention a également pour but de concevoir un appareil de mesure tridimensionnelle à bras articulés qui soit particulièrement bien adapté au transport en valise, avec une fiabilité qui n'est pas affectée par le transport, même en cas de chocs.

### Définition générale de l'invention

Le problème précité est résolu conformément à l'invention grâce à un appareil de mesure tridimensionnelle à bras articulés du type précité, dans lequel le tube creux intercalé entre deux tronçons de bras présente, à chacune de ses extrémités, une configuration d'aboutement complémentaire de celle des extrémités des tronçons de bras adjacents, lesdites configurations d'aboutement complémentaires étant du type à brides femelle et mâle, avec une couronne de contact circulaire, le couplage entre ledit tube creux et lesdits tronçons de bras étant assuré au niveau desdites extrémités aboutées par des moyens de serrage démontables constitués par des colliers articulés venant coiffer les brides complémentaires aboutées concernées, permettant de remplacer in situ le tube creux par un autre tube creux de longueur différente.

Grâce à une telle structure, il devient possible pour l'opérateur d'effectuer des opérations de montage et démontage à la fois rapides et répétables, et ce sur le site même de mesure. De plus, le simple fait de prévoir un tube creux court et un tube creux long procure une souplesse d'utilisation très intéressante, en permettant à l'opérateur de tenir compte du volume d'espace mesuré pour une même machine, tout en conservant la précision initiale de l'appareil de mesure, et sans avoir à recalibrer l'ensemble de l'appareil. En outre, le transport de la machine à l'état démonté dans une valise est envisageable avec un encombrement aussi réduit que possible et une grande fiabilité lors du transport. En particulier, il convient de noter que le transport à l'état démonté préserve la fiabilité de l'appareil en cas de chocs, dans la mesure où les tubes creux rangés dans la valise dispensent l'opérateur d'effectuer un recalibrage général de l'appareil.

De préférence, chaque tube creux présente, à une extrémité, une configuration d'aboutement d'un premier type, et, à son extrémité opposée, une configuration d'aboutement d'un deuxième type complémentaire du premier type.

Un tel agencement permet à la fois de procurer une grande souplesse d'utilisation, mais aussi évite un montage inversé d'un tube creux.

Avantageusement, les configurations d'aboutement complémentaires comportent en outre un moyen d'indexage angulaire. En particulier le moyen d'indexage angulaire comporte un doigt axial porté par une bride et un perçage axial ménagé dans l'autre bride.

Conformément à un mode d'exécution particulier, les moyens de serrage démontables sont constitués par des colliers articulés venant coiffer les brides complémentaires aboutées. On pourra naturellement en variante prévoir que le couplage mécanique démontable est assuré par un boulonnage de brides en regard, mais, ces opérations sont à la fois plus fastidieuses et plus exigeantes en termes de soin et de précision, de sorte que, dans la pratique, l'utilisation de colliers articulés restera préférée.

De préférence alors, chaque collier articulé présente des facettes coniques en regard destinées à venir au contact des faces extérieures coniques des brides complémentaires aboutées. En particulier, les brides femelle et mâle sont équipées d'une coupelle d'enveloppement dont le diamètre extérieur correspond sensiblement à celui du collier articulé constituant les moyens de serrage démontables.

Il est par ailleurs avantageux de prévoir que chaque tube soit équipé intérieurement d'une carte électronique d'identification qui est reliée à un bus de communication associé. Ceci est précieux pour éviter les erreurs de montage des tubes creux.

De préférence encore, les brides femelle et mâle sont également équipées d'organes de connexion complémentaires assurant automatiquement un couplage électrique lorsque lesdites brides sont couplées mécaniquement par les colliers articulés constituant les moyens de serrage démontables.

Avantageusement alors, les organes de connexion complémentaires comportent une pluralité de lames de contact homologues. En particulier, il pourra être prévu pour chaque bride un ensemble limité à cinq lames de contact. De préférence alors, chaque ensemble de connexion comporte une lame de contact supplémentaire permettant de fournir un signal de reconnaissance du type de tube creux utilisé.

D'autres caractéristiques et avantages de l'invention apparaîtront plus clairement à la lumière de la description qui va suivre et des dessins annexés, concernant un mode de réalisation particulier.

### Brève description des dessins

Il sera fait référence aux figures des dessins annexés, où :
- la figure 1 illustre en perspective un appareil de mesure tridimensionnelle à bras articulés réalisé conformément à l'invention, avec deux bras comportant un tube creux ;
- la figure 2 est une vue analogue à celle de la figure 1, illustrant le bras avec ses composants séparés, afin de mettre en évidence la présence des deux tubes creux et des moyens de serrage démontables associés, en l'espèce réalisés sous la forme de colliers articulés ;
- les figures 3 et 4 illustrent en perspective l'un des colliers articulés précités, respectivement dans une position avant et après serrage ;
- la figure 5 est une coupe partielle en perspective au niveau de deux configurations d'aboutement complémentaires, illustrant à la fois le couplage mécanique réalisé par le collier articulé, et le couplage électrique assuré par des organes de connexion complémentaires à lames de contact homologues ; et
- la figure 6 illustre en perspective, à l'état ouvert, la jonction de deux configurations d'aboutement complémentaires, permettant de mieux distinguer les organes de couplage mécaniques et électriques concernés.

### Description détaillée du mode de réalisation préféré de l'invention.

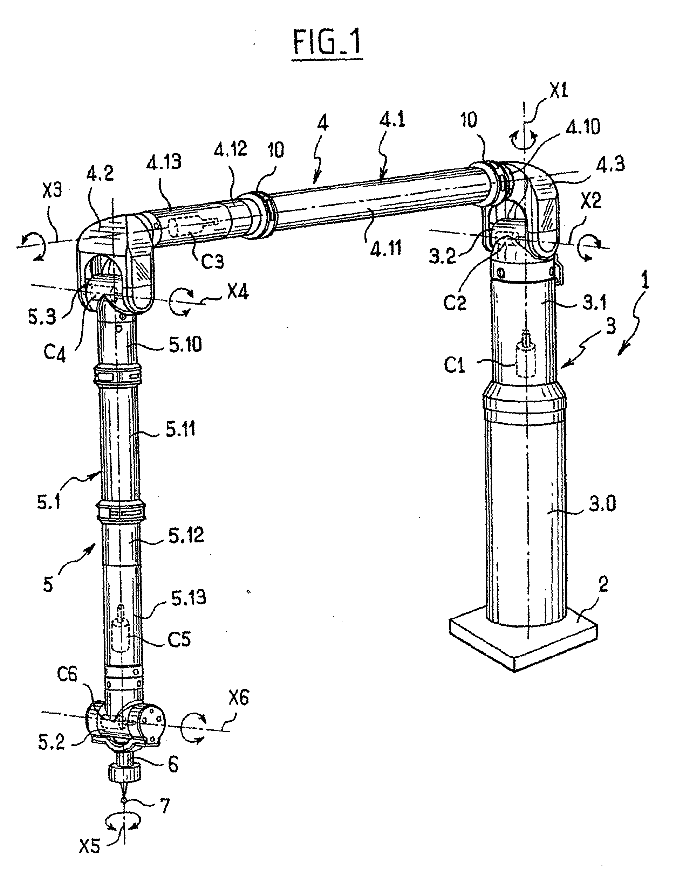

Il sera fait référence aux figures 1 à 6 pour décrire maintenant plus en détail la structure d'un appareil de mesure tridimensionnelle à bras articulés conforme à l'invention.

La figure 1 permet de distinguer un appareil de mesure tridimensionnelle à bras articulés noté 1, ici du type six axes. L'appareil de mesure 1 comporte en l'espèce un socle de support 2 surmonté d'une base cylindrique 3.0 associée à un premier bras tournant 3. Ce premier bras tournant 3 est suivi de deux bras articulés 4 et 5, et d'un capteur de mesure 7 monté en extrémité d'un support articulé en forme de chape 6.

Le premier bras 3 comporte un corps tubulaire 3.1 d'axe X1, terminé par une extrémité d'articulation 3.2 qui peut tourner autour de cet axe central X1. L'extrémité d'articulation 3.2 porte une chape pivotante 4.3 faisant partie du bras suivant 4, laquelle chape peut pivoter autour d'un axe noté X2. Le bras 4 est relié à la chape pivotante 4.3, et comporte un corps tubulaire 4.1 et une extrémité d'articulation 4.2 ici en forme de chape, qui peut tourner autour de l'axe central du bras 4 noté X3. La chape 4.2 est à son tour équipée d'une extrémité d'articulation 5.3 faisant partie du bras suivant 5. L'extrémité d'articulation 5.3 peut pivoter autour d'un axe noté X4 de la chape 4.2 du bras 4. Ce dernier bras 5, associé à l'extrémité d'articulation 5.3, comporte à son tour un corps tubulaire 5.1 et une extrémité d'articulation 5.2, cette dernière pouvant tourner autour de l'axe central noté X5 dudit bras. Enfin, l'extrémité d'articulation 5.2 est équipée d'une chape terminale 6 qui se termine par un capteur de mesure 7. La chape terminale 6 et le capteur de mesure 7 associé peuvent pivoter autour d'un axe noté X6 de l'extrémité d'articulation 5.2 du bras 5.

On constate ainsi la présence de six axes d'articulation, notés X1, X2, X3, X4, X5, X6. Il s'agit donc ici d'un bras de mesure dit à six axes. L'invention n'est cependant aucunement limitée à un tel nombre d'axes, et l'on pourra aussi bien prévoir une machine à sept axes, voire plus.

Les angles de rotation autour de chacun de ces six axes sont mesurés individuellement par des codeurs angulaires associés intégrés aux parties concernées des bras mobiles, ces codeurs étant notés ici C1, C2, C3, C4, C5, C6 en association avec les axes correspondants X1, X2, X3, X4, X5, X6.

D'une façon générale, la structure de l'appareil de mesure 1 telle qu'elle vient d'être décrite est parfaitement conforme aux réalisations traditionnelles antérieures des appareils de mesure tridimensionnelle à bras articulés.

Conformément à un aspect caractéristique de l'invention, l'un au moins des bras 4, 5 de l'appareil 1 comporte un tube creux intercalé entre deux tronçons de bras dont l'un reçoit un codeur angulaire mesurant l'angle de rotation autour de l'axe longitudinal X3, X5 dudit bras. De plus, le tube creux concerné présente, à chacune de ses extrémités, une configuration d'aboutement complémentaire de celle des extrémités des tronçons de bras adjacents de façon à assurer un alignement précis, stable et répétitif sur l'axe du bras indépendamment du serrage des extrémités aboutées concernées l'une contre l'autre, le couplage entre ledit tube creux et lesdits tronçons de bras étant assuré au niveau desdites extrémités aboutées par des moyens de serrage démontables, notés 10, permettant de remplacer in situ le tube creux par un autre tube creux de longueur différente sans avoir à recalibrer l'ensemble de l'appareil.

En l'espèce, on a prévu un tube creux pour chacun des bras 4 et 5 de l'appareil, ce qui permet de profiter de façon optimale de la souplesse d'utilisation procurée par un tel caractère démontable. On pourrait cependant se contenter de prévoir un tube creux sur un seul de ces bras si le type d'utilisation le permet.

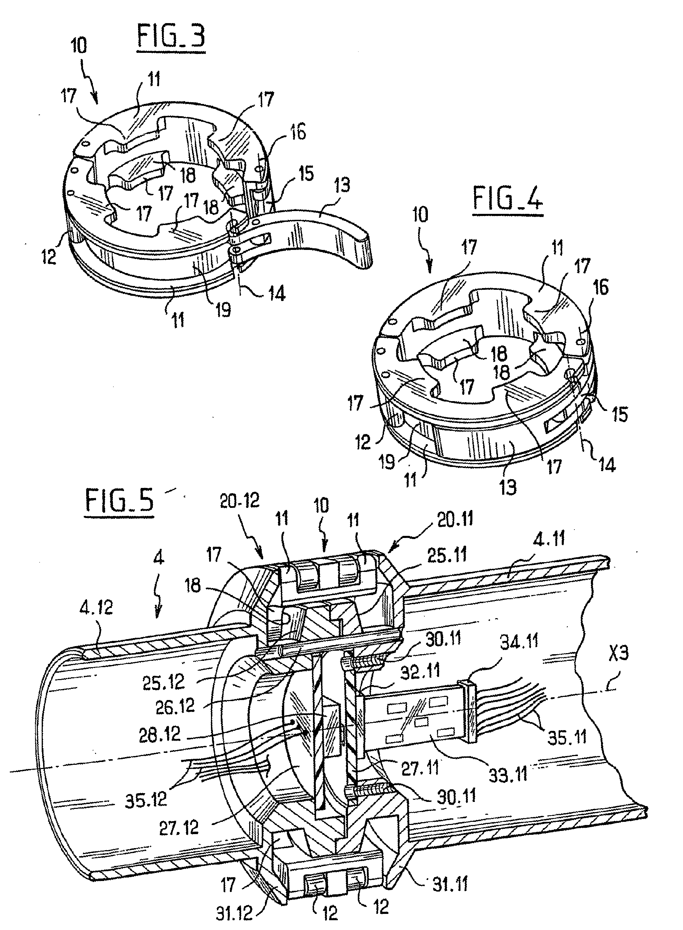

Ainsi, et conformément à une caractéristique de l'invention, le corps tubulaire 4.1 du bras 4 comporte un tube creux 4.11 intercalé entre deux tronçons de bras dont l'un reçoit le codeur angulaire C3 mesurant l'angle de rotation autour de l'axe longitudinal X3. En l'espèce, le tronçon de bras 4.10 fait partie intégrante de la chape 4.3, et l'autre tronçon de bras comporte une partie 4.13 rigidement solidaire de la chape 4.2 et renfermant le codeur angulaire C3, et une partie complémentaire 4.12 qui peut tourner par rapport à la partie 4.13 autour de l'axe X3, cette dernière partie 4.12 étant en l'espèce accouplée au tube creux 4.11. Le couplage entre le tube creux 4.11 et les tronçons de bras 4.10 d'une part et 4.12, 4.13 d'autre part est assuré au niveau des extrémités aboutées par des moyens de serrage démontables, ici notés 10, qui sont réalisés sous la forme de colliers articulés qui seront décrits plus en détail en référence aux figures 3 et 4.

De la même façon, le corps tubulaire 5.1 du bras 5 comporte un tube creux 5.11 qui est intercalé entre deux tronçons de bras dont l'un reçoit le codeur angulaire C5 mesurant l'angle de rotation autour de l'axe longitudinal X5 dudit bras. En l'espèce, le tube creux 5.11 est intercalé entre un tronçon 5.10 qui est rigidement solidaire de l'extrémité d'articulation 5.3 du bras 5, et une portion 5.12 qui est reliée à la portion 5.13 logeant le codeur angulaire C5, en pouvant tourner par rapport à cette dernière autour de l'axe X5. Là encore, le couplage entre le tube creux 5.11 et les deux tronçons de bras concernés est assuré au niveau des extrémités aboutées par des moyens de serrage démontables 10 ici réalisés sous la forme de colliers articulés identiques à ceux utilisés pour le tube creux 4.11 du bras 4.

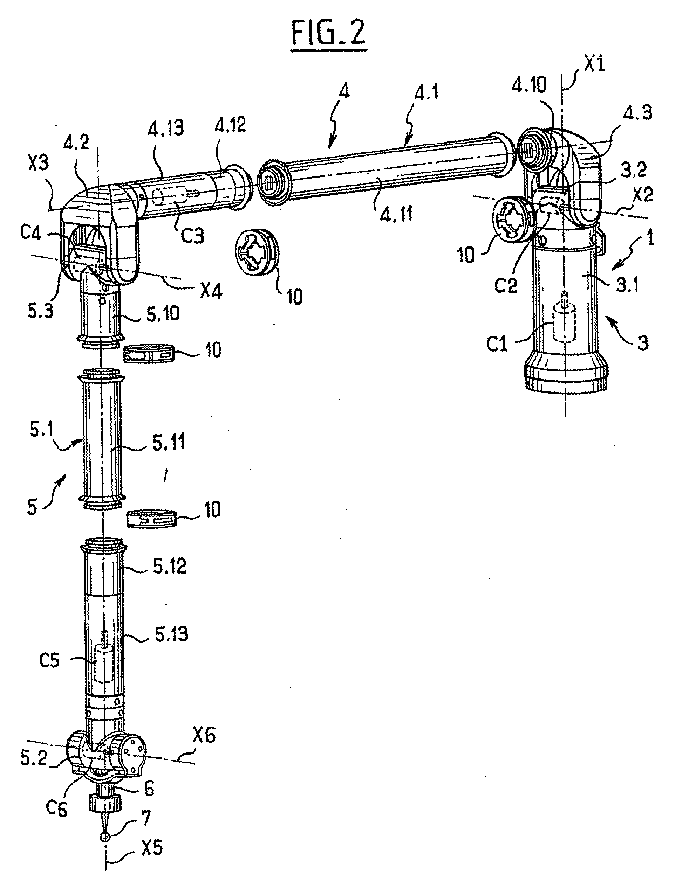

Comme cela est illustré sur la figure 2, lorsque les colliers articulés 10 sont démontés, les bras 4 et 5 de l'appareil de mesure se présentent sous la forme de composants séparés de faible encombrement, et donc facilement susceptibles d'être rangés dans une valise de transport.

Plus important est le fait que les tubes creux 4.11 et 5.11 peuvent être choisis parmi une pluralité de tubes creux disponibles avec comme seul critère la longueur du tube creux. Ce choix de longueur sera effectué par l'opérateur en fonction du type de travail à réaliser et donc de l'espace de mesure concerné. On conçoit immédiatement l'avantage considérable que représente une telle structure en termes de souplesse d'utilisation, dans la mesure où l'opérateur peut, sur le site même de la mesure, procéder au démontage rapide des deux colliers articulés concernés pour démonter le tube creux qui est présent, et remplacer celui-ci par un autre tube creux de longueur différente mieux adapté au type de mesure concerné. Il suffit à l'opérateur de replacer les colliers articulés pour réaliser le couplage mécanique et, ainsi qu'on le verra par la suite, également le couplage électrique, et ce sans avoir à procéder à un recalibrage de l'ensemble de l'appareil de mesure. Tout ceci est rendu possible par un agencement particulier des configurations d'aboutement complémentaires qui permettent de garantir un alignement précis et stable sur l'axe du bras indépendamment du serrage des extrémités aboutées concernées l'une contre l'autre.

Les figures 3 et 4 permettent de distinguer un collier articulé 10 destiné à assurer le couplage mécanique, et donc aussi électrique, entre les extrémités aboutées d'un tube creux et d'un tronçon de bras.

En l'espèce, chaque collier articulé 10 comporte deux composants articulés entre eux par une pièce 12, et présentant chacun deux demi-couronnes superposées 11 qui sont destinées à coiffer les éléments aboutés. Un levier articulé 13 permet d'ouvrir ou de fermer le collier 10. Le levier 13 est relié, de façon articulée, à un étrier incurvé 15 qui est lui-même articulé en 16 sur l'un des composants du collier, et ce de façon permanente. Le même levier 13 est articulé en 14 sur l'autre composant du collier 10, en étant séparable pour pouvoir ouvrir ledit collier. Chaque couronne complète 11 présente des languettes de serrage 17, ici au nombre de quatre, dont les facettes internes en regard 18 sont agencées avec une légère conicité. Ces facettes coniques 18 sont destinées à venir au contact des faces extérieures coniques des brides complémentaires aboutées. On notera également la présence d'un évidement 19 permettant de recevoir le levier 13 en position de fermeture du collier, comme cela est illustré sur la figure 4.

On va maintenant décrire plus en détail la structure de deux extrémités aboutées, dont l'une fait partie d'un tube creux, et dont l'autre fait partie d'un tronçon de bras associé. Sur ces figures, on a seulement illustré une extrémité du tube creux 4.11 et une extrémité de la partie 4.12 du tronçon de bras associé, étant entendu que cet agencement se retrouve non seulement à l'autre extrémité du tube creux 4.11, mais également pour l'autre tube creux 5.11 associé au bras 5.

Il convient à ce titre de noter qu'il est avantageux de prévoir que chaque tube creux 4.11 ou 5.11 présente, à une extrémité, une configuration d'aboutement d'un premier type, et, à son autre extrémité opposée, une configuration d'aboutement d'un deuxième type complémentaire du premier type. Bien que ce choix ne soit aucunement indispensable, il permet d'éviter toute erreur de positionnement d'un tube creux qui aboutirait à une mauvaise présentation des configurations d'aboutement et/ou des organes de connexion associés.

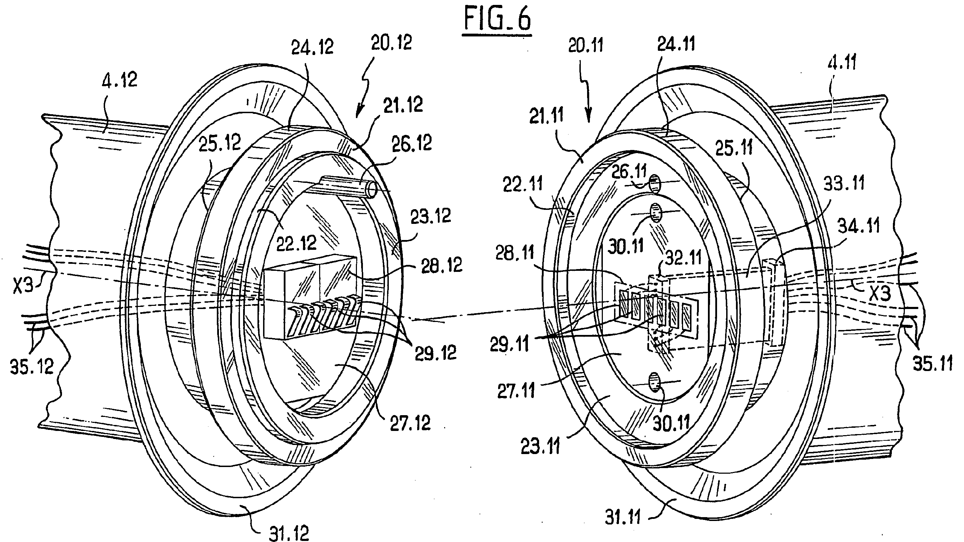

Comme cela est visible sur les figures 5 et 6, les configurations d'aboutement complémentaires sont du type à brides femelle et mâle. En l'espèce, la bride femelle 20.11 est prévue sur le tube creux 4.11, et la bride mâle 20.12 est prévue sur la partie 4.12 du tronçon de bras, mais on pourra naturellement prévoir une disposition inverse.

La bride femelle 20.11 comporte une couronne extérieure d'appui circulaire 21.11 se raccordant à une portion cylindrique 22.11 puis à une nouvelle couronne circulaire 23.11. Sur la bride mâle 20.12, on trouve une couronne circulaire 21.12 destinée à venir en contact d'appui avec la couronne 21.11 de la bride 20.11, puis une partie mâle cylindrique 22.12 se terminant par une couronne 23.12. Lorsque les deux extrémités aboutées sont rapprochées l'une de l'autre selon l'axe commun du bras (ici l'axe X3), on obtient à la fois un appui sur les couronnes en regard 21.11, 21.12, et un alignement sur l'axe X3 du bras par les surfaces cylindriques 22.11, 22.12 qui réalisent un emboîtement. Les couronnes 23.11 et 23.12 sont, quant à elles, adjacentes, mais pas en contact d'appui.

Il est également prévu un moyen d'indexage angulaire, qui comporte en l'espèce un doigt axial 26.12 qui est porté par une bride (ici la bride mâle 20.12) et un perçage axial 26.11 ménagé dans l'autre bride (ici la bride femelle 20.11) . On pourra prévoir un léger jeu en sur-dimensionnant le perçage axial 26.11 afin d'éviter tout risque de coincement lors du montage ou du démontage du fait de cet indexage angulaire. En effet, comme on le verra par la suite, un simple recalibrage associé à la rotation autour de l'axe du bras, en l'espèce l'axe X3, pourra suffire après le remontage d'un nouveau tube creux 4.11.

Comme cela est mieux visible sur la figure 5, les brides femelle et mâle 20.11, 20.12 présentent des faces extérieures coniques 25.11, 25.12 au contact desquelles viennent les facettes coniques en regard 18 du collier articulé 10 concerné. Il est aisé de comprendre que le serrage du collier articulé 10 permet d'obtenir un contact parfait entre les couronnes d'appui 21.11, 21.12, avec un alignement très précis sur l'axe X3 du bras. On notera également la présence, sur les brides femelle et mâle 20.11, 20.12, de coupelles d'enveloppement 31.11, 31.12 dont le diamètre extérieur correspond sensiblement à celui du collier articulé 10. Ainsi, comme cela est visible sur la figure 5, en position d'accouplement, collier fermé, on ne distingue qu'une légère sur-épaisseur au niveau des zones d'aboutement, et ce sans risque de pénétration d'agents contaminants extérieurs qui viendraient affecter les organes de connexion électrique qui vont être décrits ci-après.

Les brides femelle et mâle 20.11, 20.12 sont également équipées d'organes de connexion complémentaires assurant automatiquement un couplage électrique lorsque lesdites brides sont couplées mécaniquement par les moyens de serrage démontables 10.

En l'espèce, les organes de connexion complémentaires comportent une pluralité de lames de contact homologues. On distingue ainsi, en l'espèce pour la bride mâle 20.12, une plaquette 27.12 portant deux blocs de connecteurs 28.12 équipés de lames de contact souples 29.12. Sur l'autre extrémité d'aboutement, on distingue une plaquette 27.11 équipée d'un connecteur plat 28.11 présentant des lames plates de contact 29.11 destinées à coopérer avec les lames de contact souples 29.12 homologues.

Il a ici été prévu, pour chaque bride 20.11, 20.12, un ensemble limité à cinq lames de contact 29.11, 29.12 pour assurer la connexion du bus de communication associé ici constitué par des fils 35.11, 35.12. En l'espèce, le bus utilisé est composé de cinq fils (ce qui ne constitue naturellement qu'un exemple), dont deux pour l'alimentation, deux pour le transfert de données, et un pour les événements. Il pourra aussi s'avérer intéressant de prévoir que chaque ensemble de connexion comporte une lame de contact supplémentaire permettant de fournir un signal de reconnaissance du type de tube creux utilisé. Le sixième fil associé permet ainsi, en l'absence de détrompage mécanique, de fournir une indication précise et immédiatement appréciable par l'opérateur sur le type de tube creux utilisé, et en particulier la longueur de celui-ci. Cette information complémentaire permet d'éviter un montage erroné d'un tube creux, ce montage erroné étant alors immédiatement signalé à l'opérateur par un message émis par l'ordinateur de commande qui est associé à l'appareil.

Il est par ailleurs intéressant de prévoir que chaque tube creux soit équipé intérieurement d'une carte électronique d'identification qui est reliée au bus de communication associé, ce qui permet de s'assurer que l'on a mis en place le bon tube creux pour la longueur de bras désirée. On distingue ainsi sur la figure 5 un ensemble porté par la plaquette 27.11 du tube creux 4.11, comprenant un connecteur 32.11 rassemblant les liaisons aux lames plates de contact 29.11, une carte électronique 33.11 reliée au connecteur 32.11, un connecteur 34.11 monté à l'autre extrémité de la carte électronique 33.11, duquel partent les six fils 35.11 du bus de communication.

On notera enfin la présence de passages 30.11 associés aux moyens mécaniques de fixation de la plaquette 27.11 sur la bride associée.

Après chaque changement de tube creux, et avant la première remise en route, il est inutile de procéder à un recalibrage de l'ensemble de l'appareil, car le restant de l'appareil a déjà été préalablement, calibré en usine pour la nouvelle longueur de tube creux. La seule opération de calibrage à laquelle devra donc se soumettre l'opérateur est un calibrage associé au codeur du bras concerné. Un tel calibrage est aisé à réaliser et prend en réalité très peu de temps. Il suffit en effet de poser le capteur 7 dans un trou conique disponible, puis de faire tourner le bras autour de ce trou en ajustant le décalage du codeur jusqu'à obtenir un point dans l'espace qui est aussi constant que possible. Il s'agit d'un simple réglage dans l'informatique, qui est effectué très rapidement, sans avoir à utiliser un outil particulier, et bien entendu sur le site même de la mesure.

On est ainsi parvenu à réaliser un appareil de mesure tridimensionnelle à conception modulaire, avec une capacité de montage et démontage à la fois rapide et répétable. L'opérateur peut procéder à des substitutions de tubes creux sur le site même de mesure sans avoir à procéder à un recalibrage général de l'appareil, grâce à l'alignement précis, stable et surtout répétitif sur l'axe du bras, obtenu par les configurations d'aboutement complémentaires. Avec plusieurs longueurs disponibles de tubes creux, en particulier une longueur courte et une longueur longue, l'appareil de mesure selon l'invention procure une adéquation optimale entre les précisions de mesure demandées et le volume de l'espace de mesure.

En plus de la longueur modulable, la structure de l'appareil de mesure selon l'invention procure des avantages importants au niveau du transport de l'appareil. En effet, le démontage permet le rangement dans une petite valise de transport, et la présence de chocs sur la valise n'a aucun impact sur la machine qui est désassemblée. A ce titre il convient de noter que le transport à l'état démonté n'induit aucun décalibrage en cas de chute de la valise, les tubes creux rangés dans la valise étant des composants inertes, de sorte que la fiabilité n'est aucunement affectée.

Enfin, la conception modulaire procure également des avantages importants au niveau de la maintenance, dans la mesure où il suffit de changer un sous-ensemble éventuellement abîmé, tout en conservant le reste des composants de l'appareil de mesure.

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Appareil de mesure tridimensionnelle à bras articulés comportant une pluralité d'axes d'articulation, avec des codeurs angulaires intégrés auxdits bras pour mesurer individuellement les angles de rotation autour de chacun desdits axes d'articulation, l'un au moins des bras (4 ; 5) de l'appareil (1) comportant un tube creux (4.11 ; 5.11) intercalé entre deux tronçons de bras dont l'un (4.13 ; 5.13) reçoit un codeur angulaire (C3 ; C5) mesurant l'angle de rotation autour de l'axe longitudinal (X3 ; X5) dudit bras, le couplage entre ledit tube creux et lesdits tronçons de bras étant assuré au niveau desdites extrémités aboutées par des moyens de serrage démontables (10) ledit tube creux présentant, à chacune de ses extrémités, une configuration d'aboutement complémentaire de celle des extrémités des tronçons de bras adjacents de façon à assurer un alignement précis, stable et répétitif sur l'axe du bras independamment du serrage des extrémités aboutées concernées l'une contre l'autre, **caractérisé en ce que** lesdites configurations d'aboutement complémentaires sont du type à brides femelle et mâle (20.11 ; 20.12), avec une couronne de contact circulaire (21.11 ; 21.12), lesdites moyens de serrage démontables étant constitués par des colliers articulés venant coiffer les brides complémentaires aboutées concernées (20.11 ; 20.12), permettant de remplacer in situ le tube creux par un autre tube creux de longueur différente sans avoir a recalibrer l'ensemble de l'appareil.

2. Appareil selon la revendication 1, **caractérisé en ce que** chaque tube creux (4.11 ; 5.11) présente, à une extrémité, une configuration d'aboutement d'un premier type, et, à son extrémité opposée, une configuration d'aboutement d'un deuxième type complémentaire du premier type.

3. Appareil selon l'une quelconque des revendications 1 ou 2, **caractérisé en ce que** les configurations d'aboutement complémentaires comportent un moyen d'indexage angulaire (26.11 ; 26.12).

4. Appareil selon la revendication 3, **caractérisé en ce que** le moyen d'indexage angulaire comporte un doigt axial (26.12) porté par une bride et un perçage axial (26.11) ménagé dans l'autre bride.

5. Appareil selon la revendication 1, **caractérisé en ce que** chaque collier articulé (10) présente des facettes coniques en regard (18) destinées à venir au contact des faces extérieures coniques (25.11 ; 25.12) des brides complémentaires aboutées (20.11 ; 20.12).

6. Appareil selon la revendication 5, **caractérisé en ce que** les brides femelle et mâle (20.11 ; 20.12) sont chacune équipées d'une coupelle d'enveloppement (31.11 ; 31.12) dont le diamètre extérieur correspond sensiblement à celui du collier articulé (10) constituant les moyens de serrage démontables.

7. Appareil selon l'une quelconque des revendications 1 à 6, **caractérisé en ce que** chaque tube creux (4.11 ; 5.11) est équipé intérieurement d'une carte électronique d'identification (33.11) qui est reliée à un bus de communication associé (35.11).

8. Appareil selon l'une quelconque des revendications 1 à 7, **caractérisé en ce que** les brides femelle et mâle (20.11 ; 20.12) sont également équipées d'organes de connexion complémentaires (29.11 ; 29.12) assurant automatiquement un couplage électrique lorsque lesdites brides sont couplées mécaniquement par les colliers articulés (10) constituant les moyens de serrage démontables.

9. Appareil selon la revendication 8, **caractérisé en ce que** les organes de connexion complémentaires comportent une pluralité de lames de contact homologues (29.11 ; 29.12).

10. Appareil selon la revendication 9, **caractérisé en ce qu'**il est prévu pour chaque bride (20.11 ; 20.12) un ensemble limité à cinq lames de contact (29.11 ; 29.12).

11. Appareil selon la revendication 10, **caractérisé en ce que** chaque ensemble de connexion comporte une lame de contact supplémentaire permettant de fournir un signal de reconnaissance du type de tube creux (4.11 ; 5.11) utilisé.

## Claims

1. An articulated-arm three-dimensional measurement apparatus having a plurality of articulation axes with angle encoders integrated in said arms for individually measuring the angles of rotation about each of said articulation axes, at least one of the arms (4; 5) of the apparatus (1) including a hollow tube (4.11; 5.11) interposed between two arm segments, one of which (4.13; 5.13) receives an angle encoder (C3; C5) measuring the angle of rotation about the longitudinal axis (X3; X5) of said arm, coupling between said hollow tube and said arm segment being provided at said abutting ends by demountable clamping means (10), said hollow tube presenting at each of its ends respective abutment configurations complementary to abutment configurations at the adjacent arm segment ends so as to ensure alignment on the axis of the arm that is accurate, stable, and repeatable independently of the clamping of the abutting ends in question one against the other, the apparatus being **characterized in that** the said complementary abutment configurations are of the type having female and male flanges (20.11, 20.12) with a circular contact ring (21.11; 21.12), the said demountable clamping means being constituted by hinged collars fitted over the abutting complementary flanges (20.11, 20.12), enabling the hollow tube to be replaced on site by another hollow tube of different length without it being necessary to recalibrate the entire apparatus.

2. An apparatus according to claim 1, **characterized in that** each hollow tube (4.11; 5.11) presents, at one end, an abutment configuration of a first type, and at its opposite end, an abutment configuration of a second type complementary to the first type.

3. An apparatus according to any one of claims 1 or 2, **characterized in that** the complementary abutment configurations include angle indexing means (26.11; 26.12).

4. An apparatus according to claim 3, **characterized in that** the angle indexing means comprise an axial finger (26.12) carried by one flange and an axial hole (26.11) formed in the other flange.

5. An apparatus according to claim 1, **characterized in that** each hinged collar (10) presents facing conical facets (18) for coming into contact with conical outer faces (25.11; 25.12) of the abutting complementary flanges (20.11; 20.12).

6. An apparatus according to claim 5, **characterized in that** each of the female and male flanges (20.11; 20.12) is equipped with a covering cup (31.11; 31.12) of outside diameter corresponding substantially to the diameter of the hinged collar (10) constituting the demountable clamping means.

7. An apparatus according to any one of claims 1 to 6, **characterized in that** each hollow tube (4.11; 5.11) is fitted internally with an identification electronics card (33.11) that is connected to an associated communications bus (35.11).

8. An apparatus according to any one of claims 1 to 7, **characterized in that** the female and male flanges (20.11; 20.12) are also fitted with complementary connector members (29.11; 29.12) for automatically providing electrical coupling when said flanges are mechanically coupled together by the hinged collars (10) constituting the demountable clamping means.

9. An apparatus according to claim 8, **characterized in that** the complementary connection members comprise a plurality of matching contact blades (29.11; 29.12).

10. An apparatus according to claim 9, **characterized in that** each flange (20.11; 20.12) is provided with an assembly restricted to five contact blades (29.11; 29.12).

11. An apparatus according to claim 10, **characterized in that** each connection assembly includes an additional contact blade making it possible to provide a signal recognizing the type of hollow tube (4.11; 5.11) in use.

## Patentansprüche

1. Vorrichtung zur dreidimensionalen Messung mit Gelenkarmen, die eine Vielzahl von Gelenkachsen umfassen, mit Winkelkodierern, die in die genannten Arme integriert sind, um einzeln die Rotationswinkel um jede der genannten Gelenkachsen zu messen, wobei mindestens einer der Arme (4; 5) der Vorrichtung (1) ein hohles Rohr (4.11; 5.11) umfasst, das zwischen zwei Armabschnitten angeordnet ist, von denen einer (4.13; 5.13) einen Winkelkodierer (C3; C5) aufnimmt, der den Rotationswinkel um die Längsachse (X3; X5) des genannten Arms misst, wobei die Kopplung zwischen dem genannten hohlen Rohr und den genannten Armabschnitten im Bereich der genannten aneinander stoßenden Enden über lösbare Spannmittel (10) sichergestellt wird, wobei das hohle Rohr an jedem seiner Enden eine Anschlusskonfiguration aufweist, die komplementär zu der der Enden der angrenzenden Armabschnitte ist, derart, dass eine genaue, stabile und wiederholbare Ausrichtung auf die Achse des Armes sichergestellt wird, unabhängig von dem Spannen der betreffenden aneinander stoßenden Enden, **dadurch gekennzeichnet, dass** die genannten komplementären Anschlusskonfigurationen der Art mit weiblichem und männlichem Flansch (20.11; 20.12) sind, mit einem kreisförmigen Kontaktkranz (21.11; 21.12), wobei die lösbaren Spannmittel aus Gelenkschellen gebildet sind, die die betreffenden komplementären aneinander stoßenden Flansche (20.11; 20.12) übergreifen werden, und ermöglichen, dass das hohle Rohr in situ durch ein anderes hohles Rohr anderer Länge ersetzt wird, ohne dass die Gesamtheit der Vorrichtung erneut kalibriert werden muss.

2. Vorrichtung nach Anspruch 1, **dadurch gekennzeichnet, dass** jedes hohle Rohr (4.11; 5.11) an einem Ende eine Anschlusskonfiguration einer ersten Art und an seinem entgegengesetzten Ende eine Anschlusskonfiguration einer zweiten Art umfasst, die komplementär zur ersten Art ist.

3. Vorrichtung nach einem der Ansprüche 1 oder 2, **dadurch gekennzeichnet, dass** die komplementären Anschlusskonfigurationen Mittel zur Winkelindexierung (26.11; 26.12) umfassen.

4. Vorrichtung nach Anspruch 3, **dadurch gekennzeichnet, dass** die Mittel zur Winkelindexierung einen axialen Stift (26.12), der von einem Flansch getragen wird, sowie eine axiale Bohrung (26.11) umfassen, die in dem anderen Flansch ausgebildet ist.

5. Vorrichtung nach Anspruch 1, **dadurch gekennzeichnet, dass** jede Gelenkschelle (10) gegenüberliegende konische Flächen (18) aufweist, die dazu bestimmt sind, mit konischen Außenflächen (25.11; 25.12) der aneinander stoßenden komplementären Flansche (20.11; 20.12) in Kontakt zu kommen.

6. Vorrichtung nach Anspruch 5, **dadurch gekennzeichnet, dass** der weibliche und der männliche Flansch (20.11; 20.12) jeweils mit einer Umhüllungsmanschette (31.11; 31.12) ausgestattet sind, deren Außendurchmesser im Wesentlichen dem der Gelenkschelle (10) entspricht, die die lösbaren Spannmittel bildet.

7. Vorrichtung nach einem der Ansprüche 1 bis 6, **dadurch gekennzeichnet, dass** jedes hohle Rohr (4.11; 5.11) innen mit einer elektronischen Identifizierungskarte (33.11) ausgestattet ist, die mit einem dazugehörigen Kommunikationsbus (35.11) verbunden ist.

8. Vorrichtung nach einem der Ansprüche 1 bis 7, **dadurch gekennzeichnet, dass** der weibliche und der männliche Flansch (20.11; 20.12) ebenfalls mit komplementären Verbindungselementen (29.11; 29.12) ausgestattet sind, die automatisch eine elektrische Kopplung gewährleisten, wenn die genannten Flansche mechanisch durch die Gelenkschellen (10) gekoppelt werden, die die lösbaren Spannmittel bilden.

9. Vorrichtung nach Anspruch 8, **dadurch gekennzeichnet, dass** die komplementären Verbindungselemente eine Vielzahl von homologen Kontaktfedern (29.11; 29.12) umfassen.

10. Vorrichtung nach Anspruch 9, **dadurch gekennzeichnet, dass** für jeden Flansch (20.11; 20.12) eine Einheit vorgesehen ist, die auf fünf Kontaktfedern (29.11; 29.12) begrenzt ist.

11. Vorrichtung nach Anspruch 10, **dadurch gekennzeichnet, dass** jede Verbindungseinheit eine zusätzliche Kontaktfeder umfasst, mit der ein Erkennungssignal zum Erkennen der Art von verwendetem hohlem Rohr (4.11; 5.11) geliefert wird.
